# EUROPEAN PATENT APPLICATION

(11) **EP 4 632 128 A1**
(43) Date of publication of application: **15.10.2025**
(21) Application number: 23917846.0
(22) Date of filing: 05.10.2023
(51) Int. Cl.: D04H 1/728, D04H 1/04, D01D 5/00, B01D 39/02

(54) **FILTER MANUFACTURING APPARATUS AND CONTROL METHOD THEREFOR**

(30) Priority: 19.01.2023 KR 20230008150
(71) Applicant: LG Electronics Inc., Yeongdeungpo-gu Seoul 07336 (KR)
(72) Inventor: BAECK, Seung Jae, Seoul 08592 (KR); HYUN, Ok Chun, Seoul 08592 (KR); LEE, Giseop, Seoul 08592 (KR)
(74) Representative: Vossius & Partner Patentanwälte Rechtsanwälte mbB
(86) International application number: PCT/KR2023/015282
(87) International publication number: WO 2024/154888

(57) **Abstract**

The present invention relates to a filter manufacturing apparatus and a control method therefor. The filter manufacturing apparatus of the present invention comprises: a spray device which is disposed to be spaced from a base, and in which a solution is stored; and a voltage device, which applies voltage to the spray device so as to discharge, to the base, the solution stored in the spray device, wherein the spray device includes: a cylinder for forming a space in which the solution is stored; a needle which is disposed at the lower side of the cylinder, and which discharges the solution stored in the cylinder so as to form same into nanofibers; and a vibration device which is disposed at one side of the needle and which generates vibration on the needle.

## Description

### Technical Field

The present disclosure relates to a filter manufacturing apparatus and, more specifically, to a filter manufacturing apparatus capable of continuously spraying a solution to form nanofibers and a control method therefor.

### Background Art

Filters are used in various fields according to the needs of people who want to breathe pleasant air. Additionally, filters used in various fields have a structure in which thick layers of nanofibers are stacked to increase air purification performance.

These filters may be manufactured by spinning nanofibers. Most nanofiber spinning technologies use electrospinning, which applies a high voltage to a small nozzle.

A solution is finely dripped onto the tip of a thin nozzle to form fibers by using electrical force. In this case, when a spraying condition is uneven, droplets at the tip of the nozzle gradually harden, causing clogging of the nozzle.

The formation of fabric is a long-term process through continuous spraying, and when nozzle clogging occurs, the efficiency and pressure loss of formed filter fabric become uneven, thereby increasing the loss rate.

In particular, since a spinning device that spins nanofibers manufactures a filter by spinning nanofibers through a plurality of spray devices, it is difficult to manage each of the spray devices, and regular management and inspection are required for clogging of nozzles of the plurality of spray devices.

### Disclosure

### Technical Problem

An objective of the present disclosure is to provide a filter manufacturing apparatus in which a spray device can be managed without requiring manual operation by a worker.

Another objective of the present disclosure is to provide a filter manufacturing apparatus in which a vibration device is operated only when a spray device is clogged, thereby enabling effective spraying.

Another objective of the present disclosure is to provide a filter manufacturing apparatus in which clogging of a needle is effectively resolved.

The objectives of the present disclosure are not limited to those mentioned above, and other objectives not specifically described will be clearly understood by those skilled in the art from the following description.

### Technical Solution

To achieve the above objectives, the present disclosure provides a vibration device capable of applying vibration to a needle from which a solution is sprayed, thereby preventing the sprayed solution from hardening.

In the present disclosure, a piezoelectric element may be used to provide vibration to the needle through which a solution is discharged.

A filter manufacturing apparatus according to an embodiment of the present disclosure includes: a spray device disposed to be spaced apart from a base and configured to store a solution therein and spray the solution; and a voltage device configured to apply a voltage to the spray device, wherein the spray device may include: a cylinder defining a space in which a solution is stored; a needle disposed on a lower side of the cylinder and configured to discharge a solution stored inside the cylinder; and a vibration device disposed on one side of the needle and configured to generate vibration on the needle, so that the needle may be vibrated.

The voltage device may apply a voltage to the spray device and additionally apply a voltage to a substrate that conveys the base, thereby enabling nanofiber spinning.

The vibration device may be disposed at a position spaced upward apart from a lower end of the needle.

The vibration device may include a first vibration device disposed to be adjacent to a lower end portion of the needle, and a second vibration device disposed on an upper side of the first vibration device, thereby vibrating the needle by using the two vibration devices.

Each of the first vibration device and the second vibration device may include a plurality of piezoelectric elements disposed around an outer circumference of the needle and configured to generate vibration on the needle, and an electrode disposed between the plurality of piezoelectric elements and configured to transmit an electrical signal to the plurality of piezoelectric elements, thereby vibrating the needle.

The vibration device may include a fixing member disposed on each of a lower end of the first vibration device and an upper end of the second vibration device so as to maintain arrangements of the first vibration device and the second vibration device, so that the vibration device may be stably fixed to the needle.

An insulator may be disposed between the vibration device and the needle to prevent a voltage generated in the vibration device from being transmitted to the needle.

The filter manufacturing apparatus may further include: a current sensor disposed between the voltage device and the needle so as to detect a flow of a current between the voltage device and the needle, thereby detecting clogging of the needle.

When no current flow is detected by the current sensor, the vibration device may be operated, so that the vibration device may be operated only when the needle is clogged.

A control method for a filter manufacturing apparatus of the present disclosure includes: spraying a solution stored in a cylinder through a needle; and vibrating the needle by using a vibration device disposed on one side of the needle, so that the solution may be sprayed by the spraying device or the needle may be vibrated by the vibrating device.

In the spraying of a solution stored in the cylinder through the needle, a voltage device connected to the needle may apply a voltage to the needle, thereby spraying the solution stored in the cylinder

The control method may further include: detecting a flow of a current between the needle and the voltage device when the voltage device is operating, wherein when no current flow is detected by the current sensor, vibrating the needle by using the vibration device may be performed, thereby operating the vibration device when the needle is clogged.

The vibration device may include a first vibration device, and a second vibration device disposed on an upper side of the first vibration device, wherein the vibrating of the needle may include: a first vibrating for vibrating the first vibration device; and a second vibrating for vibrating the second vibration device, thereby vibrating each of the first vibration device and the second vibration device.

The first vibrating and the second vibrating may be performed alternately, so that vibrations may be generated up and down on the needle.

In the vibrating of the needle, the first vibrating may be performed after the second vibrating, so that the lower side may be vibrated after the upper side vibrates.

A frequency at which the first vibration device vibrates in the first vibrating may be higher than a frequency at which the second vibration device vibrates in the second vibrating.

### Advantageous Effects

According to the filter manufacturing apparatus of the present disclosure, one or more of the following effects may be achieved.

First, by vibrating the needle, clogging of the needle caused by a solution solidifying in the needle may be eliminated. Therefore, there is an advantage in that a solution can be continuously sprayed through the needle.

In addition, periodic vibration may be applied to the needle to prevent a solution from solidifying in the needle. In this way, it may be possible to spray a solution through the needle for a long time to form nanofibers.

Next, the clogging state of the needle may be detected through the current sensor, and when the needle is clogged, the vibration device may be operated to secure the spraying time of the spray device and reduce unnecessary operation of the vibration device. There is the advantage of minimizing power consumption that occurs when operating the vibration device.

In addition, the vibration device may include a plurality of vibration devices, and by individually operating the plurality of vibration devices, there is an advantage of effectively resolving the clogging of the needle.

### Description of Drawings

FIG. 1 is a schematic diagram illustrating a filter manufacturing apparatus according to an embodiment of the present disclosure.
FIG. 2 is a bottom view illustrating a spinning device in which a plurality of spray devices according to an embodiment of the present disclosure is arranged.
FIG. 3 is a drawing illustrating the connection relationship and operation of a spray device and a voltage device according to an embodiment of the present disclosure.

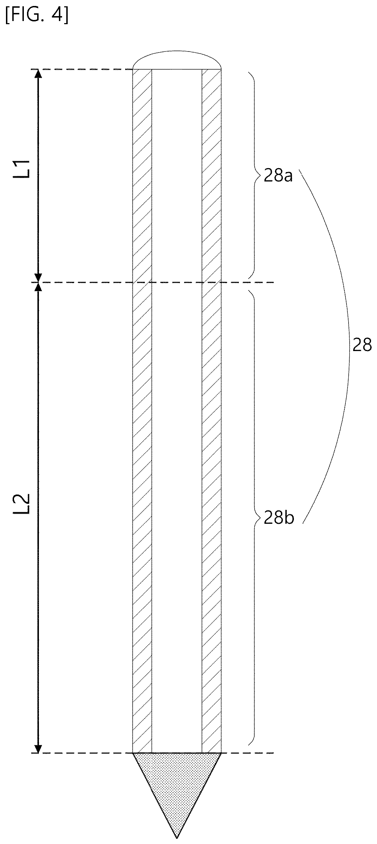

FIG. 4 is a drawing illustrating a needle of the spray device according to an embodiment of the present disclosure.
FIG. 5 is a perspective view of the needle and a vibration device disposed around the outer circumference of the needle according to an embodiment of the present disclosure.
FIG. 6 is a partial cross-sectional perspective view of one side of FIG. 5.
FIG. 7 is a flowchart of a control method for the filter manufacturing apparatus according to an embodiment of the present disclosure.

### Best Mode

Below, some embodiments of the present disclosure are described in detail with exemplary drawings. When adding reference numerals to components in each drawing, it should be noted that identical components are given the same reference numerals as much as possible even if they are shown in different drawings. In addition, when describing the embodiments of the present disclosure, if it is determined that a detailed description of a related known structure or function hinders understanding of the embodiments of the present disclosure, such detailed description will be omitted.

Hereinafter, the present disclosure will be described with reference to drawings for explaining a filter manufacturing apparatus according to embodiments of the present disclosure.

The filter manufacturing apparatus is an apparatus that manufactures a filter by spinning nanofibers 1 onto a base 2. The filter produced here may also be used in air purifiers, air conditioners, and masks that filter out fine dust. The filter manufacturing apparatus may form a nanofiber layer by spinning nanofibers 1 onto a substrate that serves as the base.

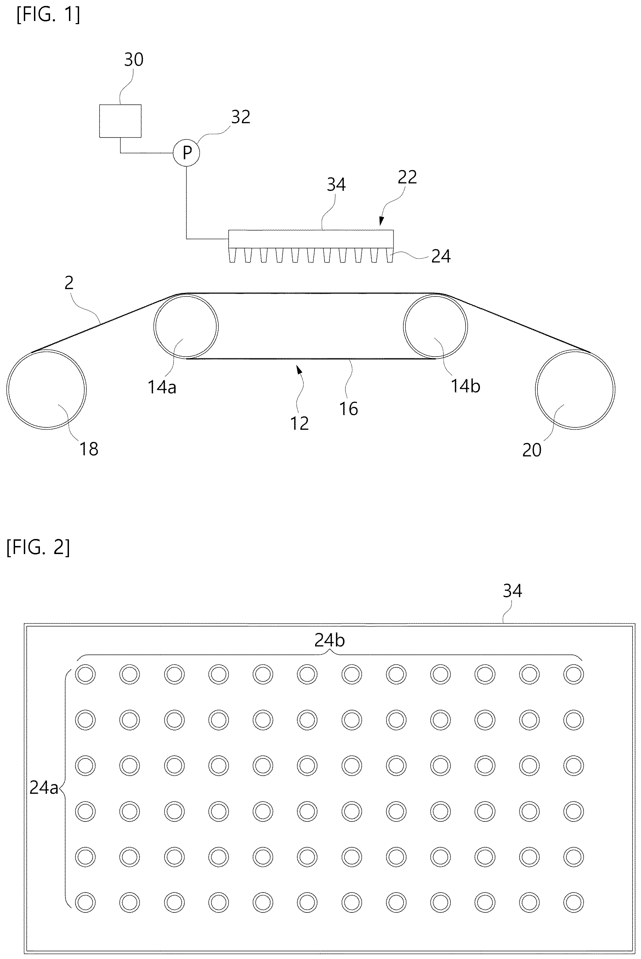

Referring to FIG. 1, the filter manufacturing apparatus may include a spinning device 22 that spins a solution onto a substrate, and a moving device 12 disposed below the spinning device 22 to move the substrate. The filter manufacturing apparatus may include a supply roller 18 that supplies the substrate, and a collection roller 20 that collects the substrate moved by the moving device 12. The moving device 12 may be disposed between the supply roller 18 and the collection roller 20.

The spinning device 22 may include a plurality of spray devices 24 arranged in a plurality of rows 24a and columns 24b. The spinning device 22 may include a storage tank 30 in which a solution is stored and a pump 32 that supplies the solution stored in the storage tank 30 to each of the plurality of spray devices 24. The plurality of spray devices 24 may have a structure in which the spray devices 24 are connected to each other through a distribution pipe 34.

The moving device 12 may be disposed between the supply roller 18 and the collection roller 20 and may move the base 2 disposed below the spinning device 22. The moving device 12 may include a plurality of rollers 14a and 14b, and a substrate 16 that is moved by the plurality of rollers 14a and 14b. The base 2 supplied by the supply roller 18 may move along the upper side of the substrate 16. The substrate 16 may move the base 2 disposed on the upper side thereof.

Referring to FIG. 2, the plurality of spray devices 24 may be arranged in a plurality of rows and a plurality of columns. Each of the plurality of spray devices 24 may be connected to the storage tank 30. In addition, each of the plurality of spray devices 24 may be connected to the storage tank 30 by a separate member.

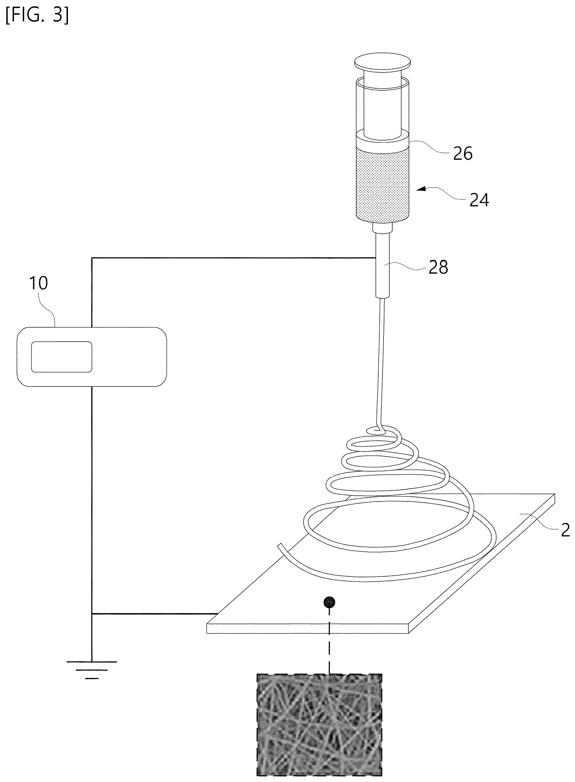

Referring to FIG. 3, the filter manufacturing apparatus may include the spray device 24 disposed to be spaced apart from the base 2 and configured to discharge a solution toward the base 2, and a voltage device 10 that applies a high voltage to the spray device 24.

The solution discharged from the spray device 24 may be nanofiberized as a solvent evaporates in the air. A formed nanofiber 1 may be deposited on the base 2. The nanofiber 1 deposited on the base 2 may form a nanofiber layer. FIG. 3 illustratively shows a microscopic image of a state in which nanofiber 1 is stacked on the base 2.

The voltage device 10 may apply a high voltage to the spray device 24, thereby generating an electric field in a solution sprayed from the spray device 24. Accordingly, an electric field may be formed on the surface of the solution discharged from the spray device 24. Depending on the discharge amount of a solution sprayed from the spray device 24 and a voltage applied by the voltage device 10, the solution sprayed from the spray device 24 may be electrospun into a fibrous form. The fiber may be stacked on the base 2 while rotating according to an electric force.

The voltage device 10 may charge a needle 28 of the spray device 24. The voltage device 10 may charge a solution collected at the tip of the needle 28. When a voltage applied to the solution exceeds a threshold voltage (Vc), spraying thereof may begin.

The threshold voltage (Vc) may be a voltage at which an electric force including mutual electrostatic repulsion and Coulomb force between surface charges exceeds the surface tension of a solution.

The voltage device 10 may be electrically connected to the moving device 12. The voltage device 10 may charge the moving device 12 that moves the base 2. The moving device 12 may include the substrate 16. The voltage device 10 may apply a voltage to the spray device 24 and the substrate 16 to charge the spray device 24 and the substrate 16.

For example, the voltage device 10 may charge the spray device 24 negatively (-) and the substrate 16 positively (+). As the spray device 24 is charged, an ejected solution may be deposited onto the charged substrate 16. Accordingly, nanofibers 1 may be deposited onto the base 2 which is conveyed along the substrate 16.

A solution stored in and discharged from the spray device 24 may be a polymer solution.

The amount of a solution sprayed from the spray device 24 may vary depending on the strength of a voltage applied by the voltage device 10.

The base 2 may be disposed below the spray device 24. A mesh substrate may be mounted on the base 2. A solution discharged from the spray device 24 may be sprayed onto the upper side of the mesh substrate to form a nanofiber filter layer.

The spray device 24 may include a cylinder 26 that defines a space in which a solution is stored, and the needle 28 configured to discharge the solution stored in the cylinder 26. The voltage device 10 may be connected to the needle 28.

The needle 28 may include a needle upper portion 28a disposed to be adjacent to the cylinder 26 and a needle lower portion 28b located below the needle upper portion 28a.

The spray device 24 may include a vibration device 40 that is disposed on one side of the needle 28 and generates vibration on the needle 28. The vibration device 40 may be disposed on the needle upper portion 28a. The needle lower portion 28b may be connected to the voltage device 10. The length L2 of the needle lower portion 28b formed in a vertical direction may be longer than the length L1 of the needle upper portion 28a formed in the vertical direction.

The vibration device 40 may be positioned to be spaced upward apart from the lower end of the needle 28 by more than half the total length of the needle 28.

The vibration device 40 may be disposed around the outer circumference of the needle 28. An insulator 48 may be disposed between the vibration device 40 and the needle 28. The insulator 48 may minimize the influence of a voltage applied to electrodes 44a and 44b of the vibration device 40 on the vibration device 40. The insulator 48 may be disposed such that a plurality of piezoelectric elements 42a, 42b, 42c, and 42d and a plurality of electrodes 44a and 44b are insulated from the needle 28. Additionally, the insulator 48 may minimize the transmission of a high voltage applied to the needle 28 by the voltage device 10 to the vibration device 40.

The vibration device 40 may include the plurality of piezoelectric elements 42a, 42b, 42c, and 42d disposed around the outer circumference of the needle 28 to generate vibrations on the needle, the plurality of electrodes 44a and 44b disposed between the plurality of piezoelectric elements 42a, 42b, 42c, and 42d to transmit electrical signals to the plurality of piezoelectric elements 42a, 42b, 42c, and 42d, and a fixing member 46 disposed on each of the upper end and lower end of the plurality of piezoelectric elements 42a, 42b, 42c, and 42d to maintain the arrangement of the plurality of piezoelectric elements 42a, 42b, 42c, and 42d and the plurality of electrodes 44a and 44b.

The vibration device 40 may include a first vibration device 40a positioned to be adjacent to the lower end portion of the needle and a second vibration device 40b disposed on the upper side of the first vibration device 40a.

Each of the plurality of piezoelectric elements 42a, 42b, 42c, and 42d may use an annulus-shaped ceramic piezoelectric element. As an example of the piezoelectric elements 42a, 42b, 42c, and 42d, there is an ultrasonic piezoelectric transducer. The ultrasonic piezoelectric transducer may include a ceramic material. The piezoelectric elements 42a, 42b, 42c, and 42d may receive an electric field and vibrate laterally to transmit vibrations to the needle 28.

The plurality of piezoelectric elements 42a, 42b, 42c, and 42d may be stacked and arranged around the outer surface of the needle 28. The plurality of electrodes 44a and 44b may be arranged between the plurality of piezoelectric elements 42a, 42b, 42c, and 42d, which are stacked and arranged, and serve to transmit power to the piezoelectric elements 42a, 42b, 42c, and 42d.

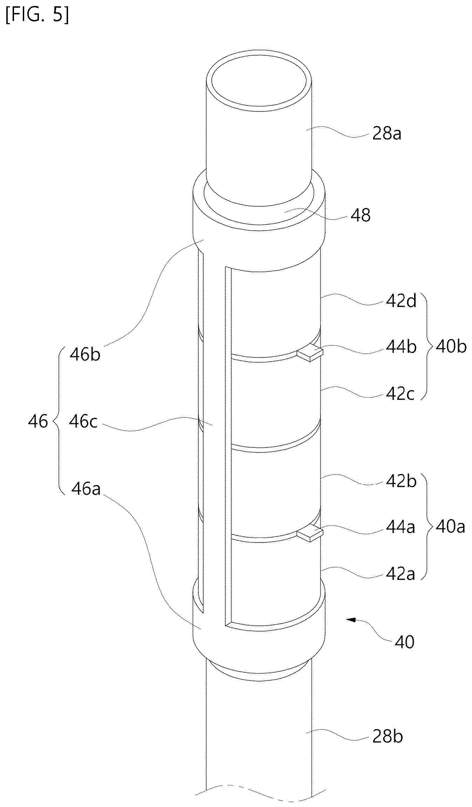

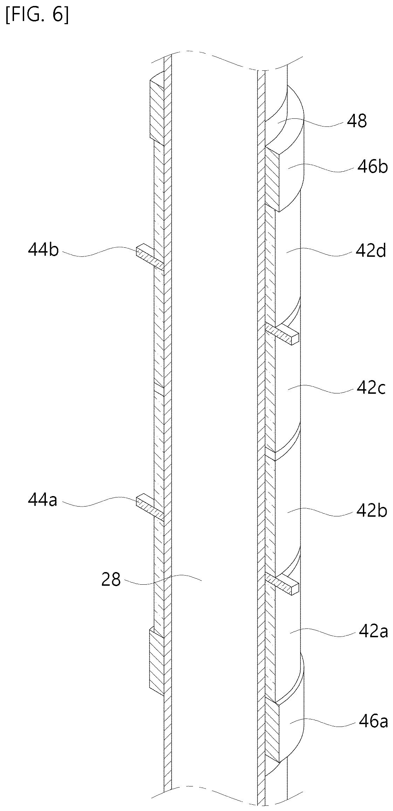

Referring to FIGS. 5 and 6, the plurality of piezoelectric elements 42a, 42b, 42c, and 42d may include a first piezoelectric element 42a, a second piezoelectric element 42b, a third piezoelectric element 42c, and a fourth piezoelectric element 42d. The first piezoelectric element 42a, the second piezoelectric element 42b, the third piezoelectric element 42c, and the fourth piezoelectric element 42d may have a structure in which they are sequentially stacked from the lower side to the upper side.

Referring to FIGS. 5 and 6, the plurality of electrodes 44a and 44b may include a first electrode 44a disposed between the first piezoelectric element 42a and the second piezoelectric element 42b, and a second electrode 44b disposed between the third piezoelectric element 42c and the fourth piezoelectric element 42d.

The first vibration device 40a may include the first piezoelectric element 42a, the first electrode 44a, and the second piezoelectric element 42b. The second vibration device 40b may include the third piezoelectric element 42c, the second electrode 44b, and the fourth piezoelectric element 42d.

Referring to FIG. 5, the fixing member 46 may include a first fixing member 46a disposed on the lower side of the first piezoelectric element 42a, a second fixing member 46b disposed on the upper side of the fourth piezoelectric element 42d, and a connecting member 46c connecting the first fixing member 46a with the second fixing member 46b. The first fixing member 46a may be disposed on the lower side of the first vibration device 40a, and the second fixing member 46b may be disposed on the upper side of the second vibration device 40b. Each of the first fixing member 46a and the second fixing member 46b may have a ring shape or a cylindrical shape.

The first vibration device 40a and the second vibration device 40b may operate alternately. The first vibration device 40a and the second vibration device 40b may be configured to operate at different times. Frequencies at which the first vibration device 40a and the second vibration device 40b vibrate may be different from each other. The vibration frequency of the first vibration device 40a may be higher than that of the second vibration device 40b.

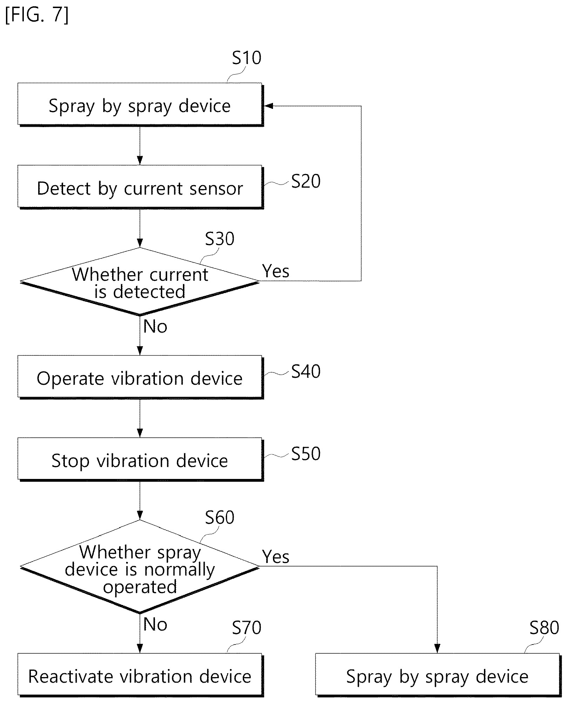

Hereinafter, the control method for a filter manufacturing apparatus will be described with reference to FIG. 7.

Spraying a solution from the spray device 24 in S10 may be performed. The spraying of a solution from the spray device 24 may be performed by the voltage device 10 applying a voltage to the spray device 24. When the voltage device 10 applies a voltage to the spray device 24, the solution stored inside the cylinder 26 of the spray device 24 may be sprayed onto the base 2.

The voltage device 10 may be electrically connected to the spray device 24. The voltage device 10 may be electrically connected to the needle 28 of the spray device 24. A current sensor 50 may be disposed on a portion at which the voltage device 10 and the needle 28 are connected. The current sensor 50 may detect a current flowing to the needle 28 by the voltage device 10. The current sensor 50 may also be disposed on the substrate 16.

The current sensor 50 may perform detecting a current between the spray device 24 and the voltage device 10 in S20. In the detecting of a current by the current sensor 50 in S20, whether the spray device 24 is clogged may be detected. The current sensor 50 may be disposed on a wire connecting the voltage device 10 with the needle 28, or may be disposed on the substrate 16 to detect a current.

That is, when the voltage device 10 is operated, the current sensor 50 may detect a current formed through the voltage device 10, the needle 28, and the substrate 16. However, when the needle 28 is clogged with a solution, no current may be detected by the current sensor 50.

The current sensor 50 may detect the flow of a current in S30, and when no current is detected, the vibration device 40 may be operated in S40. When the current sensor 50 detects the flow of a current, the spray device 24 may not be clogged, so the spray device 24 may continuously perform the spraying of a solution in S10.

In the operating of the vibration device 40 in S40, a current may be transmitted to the electrodes 44a and 44b of the vibration device 40 so that the plurality of piezoelectric elements 42a, 42b, 42c, and 42d vibrate, particularly laterally, thereby transmitting vibration to the needle 28.

The operating of the vibration device 40 in S40 may be performed for a predetermined period of time.

The operating of the vibration device 40 in S40 may include a first vibrating for vibrating the first vibration device 40a, and a second vibrating for vibrating the second vibration device 40b.

In the operating of the vibration device 40 in S40, the first vibration device 40a and the second vibration device 40b may be operated alternately. The first vibrating and the second vibrating may be performed alternately.

In the operating of the vibration device 40 in S40, the second vibrating may be performed for a first set time, and the first vibrating may be performed for a second set time. The first set time and the second set time may be different. A frequency at which the first vibration device 40a vibrates in the first vibrating may be higher than a frequency at which the second vibration device 40b vibrates in the second vibrating.

In the operating of the vibration device 40 in S40, vibrations may be generated at a first ultrasonic frequency.

After a predetermined period of time has elapsed, stopping the operation of the vibration device 40 may be performed in S50.

Afterwards, checking the normal operation of the spray device 24 may be performed in S60. The checking of the normal operation of the spray device 24 in S60 may be performed by supplying a voltage to the needle 28 through the voltage device 10 and detecting a current by using the current sensor 50.

In the checking of the normal operation of the spray device 24 in S60, when the flow of a current is not detected by the current sensor 50, reactivating the vibration device 40 may be performed in S70.

In the reactivating of the vibration device 40 in S70, vibration may be generated at a second ultrasonic frequency different from the first ultrasonic frequency.

In the checking of the normal operation of the spray device 24 in S60, when the flow of a current is detected by the current sensor 50, spraying a solution through the spray device 24 may be performed in S80.

In the above, even though all components according to the embodiments of the present disclosure have been described as being combined or operating in combination as one, the present disclosure is not necessarily limited to these embodiments. That is, within the scope of the objectives of the present disclosure, all of the components may be selectively combined and operated in one or more combinations.

## Claims

1. A filter manufacturing apparatus comprising:
a spray device disposed to be spaced apart from a base and configured to store a solution therein and spray the solution; and
a voltage device configured to apply a voltage to the spray device,
wherein the spray device comprises:
a cylinder defining a space in which a solution is stored;
a needle disposed on a lower side of the cylinder and configured to discharge a solution stored inside the cylinder; and
a vibration device disposed on one side of the needle and configured to generate vibration on the needle.

2. The filter manufacturing apparatus of claim 1, wherein the voltage device applies a voltage to the spray device and additionally applies a voltage to a substrate that conveys the base.

3. The filter manufacturing apparatus of claim 1, wherein the vibration device is disposed at a position spaced upward apart from a lower end of the needle.

4. The filter manufacturing apparatus of claim 1, wherein the vibration device comprises a first vibration device disposed to be adjacent to a lower end portion of the needle, and a second vibration device disposed on an upper side of the first vibration device.

5. The filter manufacturing apparatus of claim 4, wherein each of the first vibration device and the second vibration device comprises a plurality of piezoelectric elements disposed around an outer circumference of the needle and configured to generate vibration on the needle, and an electrode disposed between the plurality of piezoelectric elements and configured to transmit an electrical signal to the plurality of piezoelectric elements.

6. The filter manufacturing apparatus of claim 4, wherein the vibration device comprises a fixing member disposed on each of a lower end of the first vibration device and an upper end of the second vibration device so as to maintain arrangements of the first vibration device and the second vibration device.

7. The filter manufacturing apparatus of claim 1, wherein an insulator is disposed between the vibration device and the needle.

8. The filter manufacturing apparatus of claim 1, further comprising:
a current sensor disposed between the voltage device and the needle so as to detect a flow of a current between the voltage device and the needle.

9. The filter manufacturing apparatus of claim 8, wherein when no current flow is detected by the current sensor, the vibration device is operated.

10. A control method for a filter manufacturing apparatus, the control method comprising:
spraying a solution stored in a cylinder through a needle; and
vibrating the needle by using a vibration device disposed on one side of the needle.

11. The control method of claim 10, wherein in the spraying of a solution stored in the cylinder through the needle, a voltage device connected to the needle applies a voltage to the needle.

12. The control method of claim 11, further comprising:
detecting a flow of a current between the needle and the voltage device when the voltage device is operating,
wherein when no current flow is detected by the current sensor, vibrating the needle by using the vibration device is performed.

13. The control method of claim 10, wherein the vibration device comprises a first vibration device, and a second vibration device disposed on an upper side of the first vibration device,
wherein the vibrating of the needle comprises:
a first vibrating for vibrating the first vibration device; and
a second vibrating for vibrating the second vibration device.

14. The control method of claim 13, wherein the first vibrating and the second vibrating are performed alternately.

15. The control method of claim 13, wherein in the vibrating of the needle, the first vibrating is performed after the second vibrating.

16. The control method of claim 13, wherein a frequency at which the first vibration device vibrates in the first vibrating is higher than a frequency at which the second vibration device vibrates in the second vibrating.
